# EUROPEAN PATENT APPLICATION

(11) **EP 4 836 423 A1**
(43) Date of publication of application: **04.11.2026**
(21) Application number: 24916549.9
(22) Date of filing: 08.11.2024
(51) Int. Cl.: H04N 21/24

(54) **BANDWIDTH PROBING METHOD AND APPARATUS, ELECTRONIC DEVICE, AND STORAGE MEDIUM**

(30) Priority: 11.01.2024 CN 202410048164
(71) Applicant: TAOBAO (CHINA) SOFTWARE CO.,LTD., Hangzhou, Zhejiang 311121 (CN)
(72) Inventor: YU, Yiding, Hangzhou, Zhejiang 311100 (CN); CHEN, Ying, Hangzhou, Zhejiang 311100 (CN); YANG, Kuan, Hangzhou, Zhejiang 311100 (CN)
(74) Representative: Wu, Ting
(86) International application number: PCT/CN2024/130677
(87) International publication number: WO 2025/148499

(57) **Abstract**

The present application discloses a bandwidth probing method, apparatus, electronic device, and storage medium. The method comprises: obtaining bitrates of multiple tier streams; obtaining a bitrate of a current playback stream, among the multiple tier streams, for a target user; using the bitrates of the multiple tier streams as candidate probing bandwidth values, and determining a probability of each candidate probing bandwidth value being selected as a target probing bandwidth value; determining a target probing bandwidth value according to the probability of each candidate probing bandwidth value being selected as the target probing bandwidth value; and probing network bandwidth of the target user according to the target probing bandwidth value. The bandwidth probing method enables rapid and accurate acquisition of a current network bandwidth prediction value.

## Description

### CROSS-REFERENCE TO RELATED APPLICATION

This application claims priority to Chinese Patent Application No. 2024100481645, filed on January 11, 2024, and entitled "A Bandwidth Probing Method, Apparatus, Electronic Device, and Storage Medium," which is incorporated herein by reference in its entirety.

### TECHNICAL FIELD

The present application relates to the field of network transmission technology, and more particularly to a bandwidth probing method. The present application also relates to a bandwidth probing apparatus, an electronic device, and a storage medium.

### BACKGROUND

In a live streaming scenario, because the environments in which users watching live streams are located are complex and diverse, the network conditions used by users vary greatly. Therefore, it is necessary to adaptively adjust the stream-pulling bitrate of users according to their network conditions. The adaptive bitrate algorithm of a live streaming system dynamically decides the appropriate stream-pulling bitrate based on the current network bandwidth prediction value, the current size of the player buffer, the real-time bitrates of streams at different bitrate tiers, and other factors, so as to provide users with live streams at different bitrates under different network conditions, thereby achieving an overall experience that excels in both video quality and playback smoothness.

The current network bandwidth prediction value, as an important input to the adaptive bitrate algorithm, can be obtained by probing or estimating the network bandwidth. However, the current network bandwidth prediction value obtained through existing bandwidth probing or estimation methods is often highly inaccurate, resulting in poor bitrate decision-making and making it difficult to provide a satisfactory viewing experience in scenarios where a user's network conditions change significantly.

### SUMMARY

The present application provides a bandwidth probing method to solve the problem of inaccurate current network bandwidth prediction values obtained through existing methods. The present application additionally provides a bandwidth probing apparatus, an electronic device, and a storage medium.

The present application provides a bandwidth probing method, comprising: obtaining bitrates of multiple tier streams; obtaining a bitrate of a current playback stream for a target user among the multiple tier streams; using the bitrates of the multiple tier streams as candidate probing bandwidth values, and determining a probability of each candidate probing bandwidth value being selected as a target probing bandwidth value; determining a target probing bandwidth value based on the probability of each candidate probing bandwidth value being selected as the target probing bandwidth value; and probing the network bandwidth of the target user based on the target probing bandwidth value.

Optionally, the obtaining a bitrate of a current playback stream for a target user among the multiple tier streams comprises: obtaining an identifier of the current playback stream for the target user; and obtaining, from the bitrates of the multiple tier streams, the bitrate corresponding to the identifier of the current playback stream, as the bitrate of the current playback stream.

Optionally, the method further comprises: obtaining a current network bandwidth prediction value; the using the bitrates of the multiple tier streams as candidate probing bandwidth values, and determining a probability of each candidate probing bandwidth value being selected as a target probing bandwidth value, comprises: if a ratio of the bitrate of the current playback stream to the current network bandwidth prediction value is less than a preset threshold, using the bitrates of the multiple tier streams as candidate probing bandwidth values, and determining a probability of each candidate probing bandwidth value being selected as a target probing bandwidth value.

Optionally, the probability of a candidate probing bandwidth value that is greater than the bitrate of the current playback stream being selected as the target probing bandwidth value is determined through the following steps: obtaining a sum of the candidate probing bandwidth values that are greater than the bitrate of the current playback stream, as the sum of candidate probing bandwidth values; arranging the candidate probing bandwidth values that are greater than the bitrate of the current playback stream in ascending order to obtain an ascending-order queue, and arranging the candidate probing bandwidth values that are greater than the bitrate of the current playback stream in descending order to obtain a descending-order queue; for any one of the candidate probing bandwidth values that are greater than the bitrate of the current playback stream, obtaining the candidate probing bandwidth value in the descending-order queue that occupies the same position as the any one candidate probing bandwidth value in the ascending-order queue, as the corresponding candidate probing bandwidth value for the any one candidate probing bandwidth value; and obtaining a ratio of the corresponding candidate probing bandwidth value for the any one candidate probing bandwidth value to the sum of candidate probing bandwidth values, as the probability of the any one candidate probing bandwidth value being selected as the target probing bandwidth value.

Optionally, the probability of a candidate probing bandwidth value that is less than or equal to the bitrate of the current playback stream being selected as the target probing bandwidth value is determined to be 0.

Optionally, the determining a target probing bandwidth value based on the probability of each candidate probing bandwidth value being selected as the target probing bandwidth value comprises: based on the probability of each candidate probing bandwidth value being selected as the target probing bandwidth value, sampling a candidate probing bandwidth value using an unequal probability sampling method, as the target probing bandwidth value.

Optionally, the method further comprises: determining a target probing period based on the target probing bandwidth value; the probing the network bandwidth of the target user based on the target probing bandwidth value comprises: when the target probing period arrives, probing the network bandwidth of the target user based on the target probing bandwidth value.

Optionally, the target probing period corresponding to when a candidate probing bandwidth value that is greater than the bitrate of the current playback stream is selected as the target probing bandwidth value is determined through the following steps: determining the probing period corresponding to the maximum candidate probing bandwidth value among the candidate probing bandwidth values that are greater than the bitrate of the current playback stream; obtaining a ratio of the target probing bandwidth value to the maximum candidate probing bandwidth value, as the probing bandwidth value ratio; and obtaining a product of the probing bandwidth value ratio and the probing period corresponding to the maximum candidate probing bandwidth value, as the target probing period.

Optionally, the method further comprises: obtaining a data reception rate during the process of probing the network bandwidth of the target user; and if the data reception rate is equal to the target probing bandwidth value, updating the current network bandwidth prediction value to the target probing bandwidth value.

Optionally, the method further comprises: if the ratio of the bitrate of the current playback stream to the current network bandwidth prediction value is greater than or equal to the preset threshold, updating the current network bandwidth prediction value using a bandwidth estimation method.

Optionally, the obtaining bitrates of multiple tier streams comprises: receiving multiple tier streams, and measuring the average bitrate of each tier stream among the multiple tier streams in real time, to obtain the bitrates of the multiple tier streams.

Optionally, the method is applied to a server, where the server is configured to send a live stream obtained from a stream-pushing end to a stream-pulling end corresponding to the target user; the method further comprises: the server transmitting a current network bandwidth prediction value updated after probing the network bandwidth of the target user to the stream-pulling end; the server obtaining a bitrate tier update request generated by the stream-pulling end based on the updated current network bandwidth prediction value; the server transmitting, to the stream-pulling end, a live stream with an updated bitrate tier based on the bitrate tier update request.

Optionally, the method is applied to a stream-pulling end corresponding to the target user, where the stream-pulling end is configured to receive a live stream obtained by a server from a stream-pushing end; the probing the network bandwidth of the target user based on the target probing bandwidth value comprises: the stream-pulling end transmitting the target probing bandwidth value to the server, so that the server probes the network bandwidth of the target user based on the target probing bandwidth value.

The present application further provides a bandwidth probing method, comprising: obtaining bitrates of multiple tier streams; obtaining a bitrate of a current playback stream for a target user among the multiple tier streams; using the bitrates of the multiple tier streams as candidate probing bandwidth values, and determining a target probing bandwidth value based on the candidate probing bandwidth values; determining a target probing period based on the target probing bandwidth value; and when the target probing period arrives, probing the network bandwidth of the target user based on the target probing bandwidth value.

Optionally, the target probing period corresponding to when a candidate probing bandwidth value that is greater than the bitrate of the current playback stream is selected as the target probing bandwidth value is determined through the following steps: determining the probing period corresponding to the maximum candidate probing bandwidth value among the candidate probing bandwidth values that are greater than the bitrate of the current playback stream; obtaining a ratio of the target probing bandwidth value to the maximum candidate probing bandwidth value, as the probing bandwidth value ratio; and obtaining a product of the probing bandwidth value ratio and the probing period corresponding to the maximum candidate probing bandwidth value, as the target probing period.

Optionally, the method further comprises: obtaining a current network bandwidth prediction value; the using the bitrates of the multiple tier streams as candidate probing bandwidth values, and obtaining a target probing bandwidth value based on the candidate probing bandwidth values, comprises: if a ratio of the bitrate of the current playback stream to the current network bandwidth prediction value is less than a preset threshold, using the bitrates of the multiple tier streams as candidate probing bandwidth values, and obtaining a target probing bandwidth value based on the candidate probing bandwidth values.

The present application further provides a bandwidth probing apparatus, comprising: a first determining unit, configured to obtain bitrates of multiple tier streams; obtain a bitrate of a current playback stream for a target user among the multiple tier streams; use the bitrates of the multiple tier streams as candidate probing bandwidth values, and determine a probability of each candidate probing bandwidth value being selected as a target probing bandwidth value; and determine a target probing bandwidth value based on the probability of each candidate probing bandwidth value being selected as the target probing bandwidth value; and a first probing unit, configured to probe the network bandwidth of the target user based on the target probing bandwidth value.

The present application further provides a bandwidth probing apparatus, comprising: a second determining unit, configured to obtain bitrates of multiple tier streams; obtain a bitrate of a current playback stream for a target user among the multiple tier streams; use the bitrates of the multiple tier streams as candidate probing bandwidth values, and determine a target probing bandwidth value based on the candidate probing bandwidth values; and determine a target probing period based on the target probing bandwidth value; a second probing unit, configured to, when the target probing period arrives, probe the network bandwidth of the target user based on the target probing bandwidth value.

The present application further provides an electronic device, comprising a processor and a memory; the memory is configured to store programs and data, and the processor invokes the programs stored in the memory to execute the bandwidth probing method described above.

The present application further provides a storage medium, where the storage medium stores programs and data, and the programs are executed by a processor to implement the bandwidth probing method described above.

Compared with the prior art, the present application has the following advantages:

The bandwidth probing method provided by the present application obtains bitrates of multiple tier streams, uses the bitrates of the multiple tier streams as candidate probing bandwidth values, and determines a target probing bandwidth value from the candidate probing bandwidth values, so as to perform on-demand probing and quickly and accurately obtain the current network bandwidth prediction value. The probability of a candidate probing bandwidth value that is greater than the bitrate of the current playback stream being selected as the target probing bandwidth value is negatively correlated with the magnitude of the candidate probing bandwidth value, which can avoid waste of traffic costs caused by an unreasonable target probing bandwidth value setting, and can also prevent the resulting current network bandwidth prediction value from fluctuating too greatly, which would cause excessively large bitrate tier switches of the live stream, resulting in abrupt changes in video quality that affect the user's viewing experience.

### BRIEF DESCRIPTION OF THE DRAWINGS

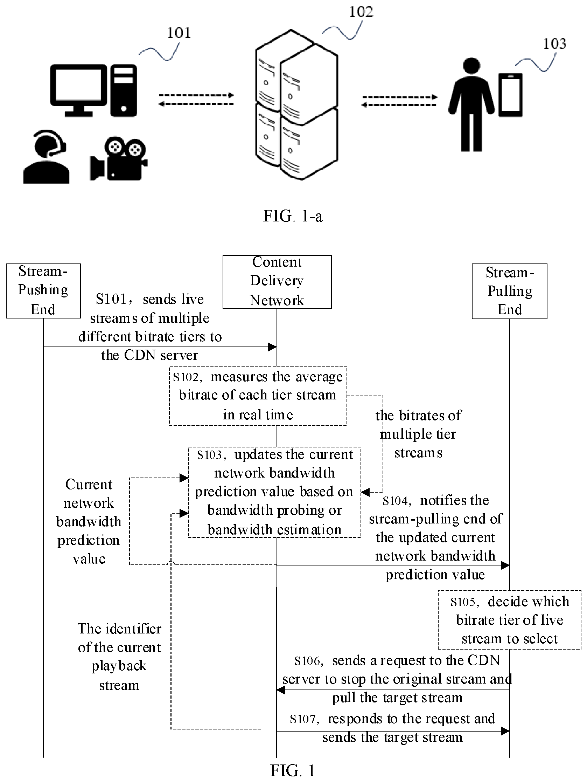

FIG. 1-a is a schematic diagram of a live streaming system provided by the present application;
FIG. 1 is a workflow diagram of a live streaming system provided by the present application;
FIG. 2 is a flowchart of specific steps in the workflow of the live streaming system provided by the present application;
FIG. 3 is a flowchart of bandwidth probing implemented by the live streaming system provided by the present application through the stream-pulling end;
FIG. 4 is a flowchart of the bandwidth probing method provided by the first embodiment of the present application;
FIG. 5 is a flowchart of the bandwidth probing method provided by the second embodiment of the present application;
FIG. 6 is a flowchart of the bandwidth probing method provided by the third embodiment of the present application;
FIG. 7 is a schematic diagram of the bandwidth probing apparatus provided by the fourth embodiment of the present application;
FIG. 8 is a schematic diagram of the bandwidth probing apparatus provided by the fifth embodiment of the present application;
FIG. 9 is a schematic diagram of the electronic device provided by the sixth embodiment of the present application.

### DETAILED DESCRIPTION OF THE EMBODIMENTS

To make the objectives, advantages, and features of the present application clearer, the present application is further described in detail below with reference to the accompanying drawings and specific embodiments. In the following description, numerous specific details are set forth to facilitate a thorough understanding of the present application. However, the present application may be implemented in many other ways different from those described herein, and those skilled in the art may make similar generalizations without departing from the spirit of the present application; therefore, the present application is not limited to the specific embodiments disclosed below.

It should be noted that in the description of the present application, the terms "first," "second," and the like are used for descriptive purposes only and are not to be construed as indicating or implying relative importance, or a specific order or sequence. For those of ordinary skill in the art, the specific meanings of the above terms in the present application may be understood according to the specific circumstances. In addition, in the description of the present application, unless otherwise stated, the term "plurality" refers to two or more. The term "and/or" describes the association relationship of associated objects, indicating that three relationships may exist; for example, A and/or B may represent: A alone exists, both A and B exist, and B alone exists, these three cases. The character "/" generally indicates that the associated objects before and after it have an "or" relationship. The terms "comprising" and "having" and any variations thereof are intended to cover non-exclusive inclusion; for example, a process, method, system, product, or device comprising a series of steps or units is not necessarily limited to those steps or units explicitly listed, but may include other steps or units not explicitly listed or inherent to such processes, methods, products, or devices.

An existing live streaming system generally comprises a stream-pushing end that provides multiple live streams, a CDN server responsible for distributing the multiple live streams, and a stream-pulling end responsible for the user's viewing of the live streams.

The stream-pushing end (also referred to as the transcoding server) is responsible for collecting multiple live streams, performing a series of processing operations such as transcoding, merging, and encryption, and then outputting the processed streams to the CDN server.

CDN (Content Delivery Network) server, that is, a content delivery network server, is responsible for receiving multiple live streams transmitted from the stream-pushing end, and distributing them to different stream-pulling ends. Due to the wide distribution of CDN servers, they can quickly transmit live streams to users in different regions.

The stream-pulling end is an application or device used by users to watch live streams; it can obtain multiple live streams from the CDN server and display them on the screen for users to watch.

The stream-pushing end typically sends live streams of different bitrate tiers for the same live streaming content to the CDN server to accommodate different network conditions and user devices. The CDN server selects a live stream of an appropriate bitrate tier for distribution and playback based on the user's network condition and device capabilities. If the user's network bandwidth is high, the CDN server can select a live stream of a higher bitrate tier to provide higherquality video. Conversely, if the user's network bandwidth is limited, the CDN server can select a live stream of a lower bitrate tier to ensure smooth playback.

In a live streaming scenario, because the environments of users watching live streams are complex and varied, the network conditions experienced by users change constantly. Therefore, it is necessary to adaptively adjust the stream-pulling bitrate of users based on their network conditions. The stream-pulling bitrate refers to the data transmission rate at which video or audio content is obtained from the network in real time, generally measured in bits per second (bps). It is an important indicator for measuring live streaming quality and directly affects the viewing experience of users. When conducting live streaming, it is generally necessary to encode the original audio and video into multiple versions at different bitrates to accommodate different network environments and terminal devices. For users with lower bandwidth, a lower-bitrate version can be selected to ensure playback smoothness; for users with higher bandwidth, a higherbitrate version can be provided to achieve better video quality. The stream-pulling bitrate is influenced by various factors such as network bandwidth, server configuration, and player capabilities, and needs to be adjusted and optimized according to actual conditions. In general, the higher the stream-pulling bitrate, the better the video and audio quality, but it also consumes more network resources. Therefore, in practical applications, it is necessary to comprehensively consider various factors and select an appropriate stream-pulling bitrate.

The adaptive bitrate algorithm of a live streaming system generally makes dynamic decisions on the appropriate stream-pulling bitrate based on the current network bandwidth prediction value, the current size of the player buffer, and the real-time bitrates of streams at different bitrate tiers, so as to provide users with live streams at different bitrates under different network conditions, thereby achieving an overall experience that optimally balances video quality and playback smoothness.

The current network bandwidth prediction value refers to an estimate or prediction of the current transmission speed of the network bandwidth. As an important input to the adaptive bitrate algorithm, the current network bandwidth prediction value can be obtained by probing or estimating the network bandwidth. If the available bandwidth cannot be accurately predicted, data over-sending may occur, causing the amount of data sent to exceed the actual capacity of the network, which in turn leads to video playback delay and stuttering; alternatively, the predicted bandwidth may be too low, causing the amount of data sent to be far below the actual capacity of the network, failing to make good use of the network bandwidth, and ultimately resulting in unclear video quality.

Currently, the current network bandwidth prediction value can generally be obtained by the following methods:
One method is the passive bandwidth estimation GCC algorithm based on delay and packet loss. GCC (Google Congestion Control) is a network congestion control algorithm for real-time media communication. Its purpose is to avoid network congestion by dynamically adjusting the transmission rate under network conditions with high latency and high packet loss rates, thereby ensuring smooth transmission of audio and video data. This algorithm can quickly respond and reduce the current network bandwidth prediction value when network quality is poor, but cannot quickly increase the current network bandwidth prediction value when the network continuously improves.

Another method is the active probing probe algorithm, which probes the network by sending data at a specified target probing bandwidth value within a short period of time, observing the data reception rate within that short period, and thereby quickly estimating the available network bandwidth to determine the current network bandwidth prediction value.

In practical applications, in scenarios where the source bitrate is controlled, such as real-time audio/video calls or conferences, the output rate of the audio/video encoder is generally equal to the current network bandwidth prediction value, and the GCC algorithm can accurately estimate the network bandwidth. In scenarios where the source bitrate is not controlled, the encoder output rate is far lower than the current network bandwidth prediction value, and the GCC algorithm's estimation of the network bandwidth is often inaccurate. In such cases, WebRTC (Web Real-Time Communications, Google's open-source audio/video project) detects the ALR state (applicationlimited region, referring to the state where the rate produced by the source is less than the network bandwidth), and initiates periodic active probing in the ALR state.

In the ALR state, the source bitrate is relatively low. In order to probe for a higher target probing bandwidth value, padding data (blank data supplementally sent during bandwidth probing) is often added during the active probing process, which results in significant traffic waste and increases the traffic cost overhead of the entire live streaming system. At the same time, when periodic active probing is performed in the ALR state, if the probing period is too small, padding data will be sent frequently, causing greater traffic cost overhead; whereas if the probing period is set too large, it will result in untimely responses to changes in network conditions, making it impossible to quickly adjust the bitrate when the network condition changes.

In addition, in the prior art, the current network bandwidth prediction value can also be obtained by the following method:
While downloading media data at the stream-pulling end, network condition collection is performed using a fixed-interval sampling mode, that is, at every fixed time interval T (ms, milliseconds), the actual downloaded data volume during that time period is measured as S (bytes), thereby obtaining a bandwidth sampling point B (kbps, kilobits per second)=S∗8/T; generally, T = 500ms. Based on these bandwidth sampling points, the true bandwidth of the network is estimated through filtering and prediction algorithms, thereby determining the current network bandwidth prediction value.

This method relies solely on the download rate of the application layer at the stream-pulling end to estimate the network bandwidth, and adopts a small sampling period of 500 ms to quickly respond to changes in network bandwidth. However, because the application layer downloads data using frame-level statistics, the sampling points within the 500 ms period still have relatively large noise, which places high demands on the filtering algorithm and makes it difficult to predict the trend of changes in network conditions. Furthermore, estimating the network bandwidth at the stream-pulling end cannot quickly perceive the actual sending rate of the CDN server, resulting in a certain degree of latency.

In summary, in a live streaming system, the current network bandwidth prediction value obtained through existing bandwidth probing or estimation methods is often quite inaccurate, leading to suboptimal bitrate decisions and making it difficult to provide a good viewing experience in scenarios where users' network conditions change significantly.

To solve the above problems, the present application provides a bandwidth probing method, which obtains bitrates of multiple tier streams, uses the bitrates of the multiple tier streams as candidate probing bandwidth values, determines a target probing bandwidth value therefrom to probe the network bandwidth, thereby quickly and accurately determining the current network bandwidth prediction value, reducing traffic costs during the bandwidth probing process, and providing a better viewing experience for live streaming viewers.

The following is a description of the bandwidth probing method provided by the present application for the application scenario of a live streaming system. As shown in FIG. 1-a, the live streaming system includes a stream-pushing end 101, a CDN server 102, and a stream-pulling end 103. The stream-pushing end 101 is responsible for collecting real-time audio and video raw data, encoding and encapsulating it to obtain live streams of different bitrates, and sending the live streams of different bitrates to the CDN server 102. The CDN server 102 receives the live streams of different bitrates and sends a live stream of one of the bitrates to the stream-pulling end 103. The stream-pulling end 103 receives and plays the live stream. It is understood that different service platforms may correspond to their respective live streaming systems, and the live streaming system corresponding to any service platform may further include multiple stream-pushing ends, CDN servers, and stream-pulling ends. The present application mainly describes the method of performing bandwidth probing on the network used by any stream-pulling end when playing a live stream.

For example, when a user uses a mobile phone to log in to an application of a service platform to watch a live program, the stream-pushing end of the live program is continuously sending live streams of different bitrate tiers for the live program to the CDN server. The live streams of different bitrate tiers have different levels of video quality; for example, a live stream of a high bitrate tier corresponds to 1080p video quality, a live stream of a medium bitrate tier corresponds to 720p video quality, a live stream of a low bitrate tier corresponds to 480p video quality, and so on, where p denotes the video format. If the user is currently watching the live stream of the medium bitrate tier, that is, the current CDN server is continuously sending the live stream of the medium bitrate tier from among the received live streams of multiple bitrate tiers to the stream-pulling end used by the user. The stream-pushing end of the live program, the CDN server, and the stream-pulling end used by the user all belong to part of the live streaming system corresponding to the service platform. The live streaming system corresponding to the service platform may adopt the method provided by the present application to probe the current bandwidth of the transmission network between the CDN server and the stream-pulling end used by the user, obtain a current network bandwidth prediction value, and thereby dynamically adjust the bitrate tier of the live stream, so as to ensure that the user enjoys good video quality while guaranteeing smooth playback.

As shown in FIG. 1, the workflow of the live streaming system applying the bandwidth probing method provided by the present application is as follows:
S101, the stream-pushing end sends live streams of multiple different bitrate tiers to the CDN server;
S102, the CDN server measures the average bitrate of each tier stream in real time;
S103, the CDN server updates the current network bandwidth prediction value based on bandwidth probing or bandwidth estimation;
S104, the CDN server notifies the stream-pulling end of the updated current network bandwidth prediction value;
S105, the stream-pulling end uses an adaptive bitrate algorithm to decide which bitrate tier of live stream to select;
S106, the stream-pulling end sends a request to the CDN server to stop the original stream and pull the target stream;
S107, the CDN server responds to the request from the stream-pulling end and sends the target stream to the stream-pulling end.

When determining the current network bandwidth prediction value, bandwidth probing or bandwidth estimation may be used. Bandwidth probing refers to a technical means of evaluating the actual available bandwidth in a network by sending a series of probe packets into the network and then observing information such as the propagation time and packet loss rate of these probe packets. Bandwidth estimation refers to a technical means of estimating the maximum available bandwidth that can be provided in a network by analyzing the propagation time of network data packets and whether packet loss occurs, among other factors.

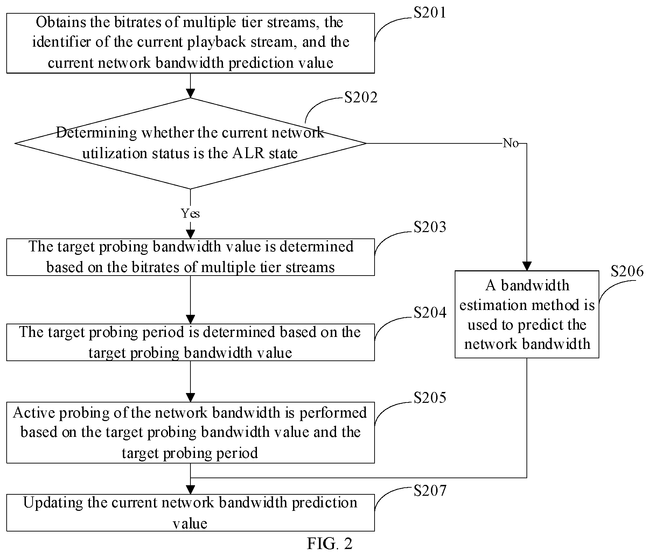

In the above workflow, steps S102 and S103 are specifically implemented through the following steps, as shown in FIG. 2:
S201, the CDN server obtains the bitrates of multiple tier streams, the identifier of the current playback stream, and the current network bandwidth prediction value.

Specifically, the CDN server receives multiple tier streams and measures the average bitrate of each tier stream in real time, i.e., measures in real time the data volume of each tier stream (unit: bits) within a unit time window (per second, per 500 ms, or per 250 ms; the present application does not limit the specific value of the unit time window), and then calculates the average bitrate (unit: bps = bits per second) of each tier stream, thereby obtaining the bitrates of multiple tier streams.

The CDN server obtains the identifier of the current playback stream for the target user, such as the ID of the current playback stream, and obtains from the bitrates of multiple tier streams the bitrate corresponding to the identifier of the current playback stream, as the bitrate of the current playback stream.

The CDN server obtains the current network bandwidth prediction value, i.e., the network bandwidth prediction value obtained prior to the current round of bandwidth probing or bandwidth estimation.

S202, determining whether the current network utilization status is the ALR state.

If the bitrate of the current playback stream < *ω* ∗ the current network bandwidth prediction value, then the current network utilization status is determined to be the ALR state, i.e., insufficient network bandwidth utilization. Here, *ω* is a hyperparameter related to the ALR state, set to 0.8 by default. If the bitrate of the current playback stream ≥ *ω* ∗ the current network bandwidth prediction value, then the current network utilization status is determined to not be the ALR state.

S203, if the current network utilization status is the ALR state, then the target probing bandwidth value is determined based on the bitrates of multiple tier streams.

Since, in the ALR state, the bitrate of the current playback stream is lower than the current network bandwidth prediction value, a higher network bandwidth value needs to be probed so that the adaptive bitrate algorithm can decide to play a live stream at a higher bitrate tier.

The bitrates of multiple tier streams are used as candidate probing bandwidth values, and the probability of each candidate probing bandwidth value being selected as the target probing bandwidth value is determined, wherein the probability of a candidate probing bandwidth value greater than the bitrate of the current playback stream being selected as the target probing bandwidth value is negatively correlated with the magnitude of the candidate probing bandwidth value, and the probability of a candidate probing bandwidth value less than or equal to the bitrate of the current playback stream being selected as the target probing bandwidth value is determined to be 0.

The probability of each candidate probing bandwidth value being selected as the target probing bandwidth value may be determined according to the following steps:
If the bitrates of multiple tier streams used as candidate probing bandwidth values are *r*₁, *r*₂, ..., *rₙ*, respectively, wherein *r*₁ < *r*₂ < ··· < *rₙ*, *n* represents the number of bitrate tiers, *rᵢ* represents the bitrate of the current playback stream, *i* represents the bitrate tier of the current playback stream, 1 ≤ *i* ≤ *n*.

Then the probability *pⱼ* of candidate probing bandwidth value *rⱼ* being selected as the target probing bandwidth value is:
${p}_{j} = \left\{\begin{matrix}0 , \\ \frac{{r}_{n + i + 1 - j}}{{\sum }_{k = i + 1}^{n} {r}_{k}} ,\end{matrix} \begin{matrix}1 \leq j \leq i \\ i + 1 \leq j \leq n\end{matrix}\right.$ (1)
wherein *k = i +* 1*,* ..., *n*.

Equation (1) above indicates that, since the current network utilization status is the ALR state, a higher network bandwidth value needs to be probed; therefore, the probability of selecting *rⱼ*(1 ≤ *j* ≤ *i*) is 0, i.e., the probability of a candidate probing bandwidth value less than or equal to the bitrate of the current playback stream being selected as the target probing bandwidth value is 0. For *rⱼ*(*i + 1* ≤ *j* ≤ *n*), i.e., the probability of a candidate probing bandwidth value greater than the bitrate of the current playback stream being selected as the target probing bandwidth value is negatively correlated with the magnitude of the candidate probing bandwidth value, meaning that the larger the candidate probing bandwidth value, the smaller the probability of it being selected, with the purpose of avoiding network congestion caused by excessively large probing bandwidth, while also avoiding large quality jumps caused by too great a difference between the original stream and the target stream bitrate tiers, which would affect the user's viewing experience.

After determining the probability of each candidate probing bandwidth value being selected as the target probing bandwidth value, unequal probability sampling may be used to sample a candidate probing bandwidth value as the target probing bandwidth value.

S204, the target probing period is determined based on the target probing bandwidth value.

The target probing period corresponding to the selection of a candidate probing bandwidth value greater than the bitrate of the current playback stream as the target probing bandwidth value is positively correlated with the magnitude of the candidate probing bandwidth value.

The target probing period may be determined according to the following steps:
If the bitrates of multiple tier streams used as candidate probing bandwidth values are *r*₁, *r*₂, ..., *rₙ,* respectively, wherein *r*₁ < *r*₂ < ··· *< rₙ,* n represents the number of bitrate tiers, *rᵢ* represents the bitrate of the current playback stream, *i* represents the bitrate tier of the current playback stream, 1 ≤ *i* ≤ *n*.

The probing period *Tₙ* corresponding to the maximum bitrate *rₙ* among the bitrates of multiple tier streams is determined, and *Tₙ* = 5*s* may be set.

Then the target probing period *Tⱼ* corresponding to target probing bandwidth value *rⱼ* is:
${T}_{j} = \left\{\begin{matrix}+ ∞ \\ \frac{{r}_{j}}{{r}_{n}} ∗ {T}_{n} ,\end{matrix} \begin{matrix}1 \leq j \leq i \\ i + 1 \leq j \leq n\end{matrix}\right.$ (2)

Equation (2) above indicates that, since the current network utilization status is the ALR state, a higher network bandwidth value needs to be probed; therefore, when *rⱼ*(1 ≤ *j* ≤ *j*) is selected as the target probing bandwidth value, the corresponding target probing period is +∞, indicating that no smaller network bandwidth value is probed. When *rⱼ*(*i* + 1 ≤ *j* ≤ *n*) is selected as the target probing bandwidth value, i.e., the target probing period corresponding to the selection of a candidate probing bandwidth value greater than the bitrate of the current playback stream as the target probing bandwidth value is positively correlated with the magnitude of the candidate probing bandwidth value, meaning that the larger the target probing bandwidth value, the larger the target probing period, with the purpose of avoiding excessively high traffic costs caused by sending padding data during bandwidth probing.

S205, active probing of the network bandwidth is performed based on the target probing bandwidth value and the target probing period.

When the target probing period arrives, the CDN server sends data at the target probing bandwidth value, and by calculating the data reception rate, it is determined whether the current network bandwidth has reached the target probing bandwidth value, thereby determining the current network bandwidth prediction value.

S206, if the current network utilization status is not the ALR state, a bandwidth estimation method is used to predict the network bandwidth.

Specifically, a GCC algorithm or a BBR (Bottleneck Bandwidth and Round-trip propagation time, an algorithm for congestion control) algorithm may be used to estimate the network bandwidth.

S207, updating the current network bandwidth prediction value.

When actively probing the network bandwidth according to the target probing bandwidth value and the target probing period, if the data reception rate equals the target probing bandwidth value, this indicates that the current network bandwidth is greater than or equal to the target probing bandwidth value, and therefore the current network bandwidth prediction value is updated to the target probing bandwidth value. If the data reception rate is less than the target probing bandwidth value, this indicates that the current network bandwidth is less than the target probing bandwidth value, and the current network bandwidth prediction value is updated to the data reception rate.

After predicting the network bandwidth using the bandwidth estimation method, the current network bandwidth prediction value is updated to the estimated network bandwidth value.

From the above steps, it can be seen that determining the target probing bandwidth value based on the bitrates of multiple tier streams and performing on-demand probing of the network bandwidth can yield a relatively accurate current network bandwidth prediction value. Here, "accurate" does not mean that the current network bandwidth prediction value equals the actual network bandwidth value, but rather that the current network bandwidth prediction value satisfies the required network bandwidth value. In addition, determining the target probing bandwidth value based on the bitrates of multiple tier streams can avoid traffic cost waste caused by unreasonable target probing bandwidth value settings, while also avoiding excessively large bitrate tier switches that cause abrupt changes in video quality and affect the user's viewing experience. The target probing period is positively correlated with the bitrates of different tier streams: a higher bitrate tier corresponds to a larger target probing period, and a lower bitrate tier corresponds to a smaller target probing period, allowing flexible adjustment of the traffic cost overhead caused by bandwidth probing. The present application involves active bandwidth probing at the packet level, which provides higher accuracy and timeliness of network bandwidth probing, and more readily delivers a smoother adaptive bitrate experience in scenarios where the user's network bandwidth fluctuates.

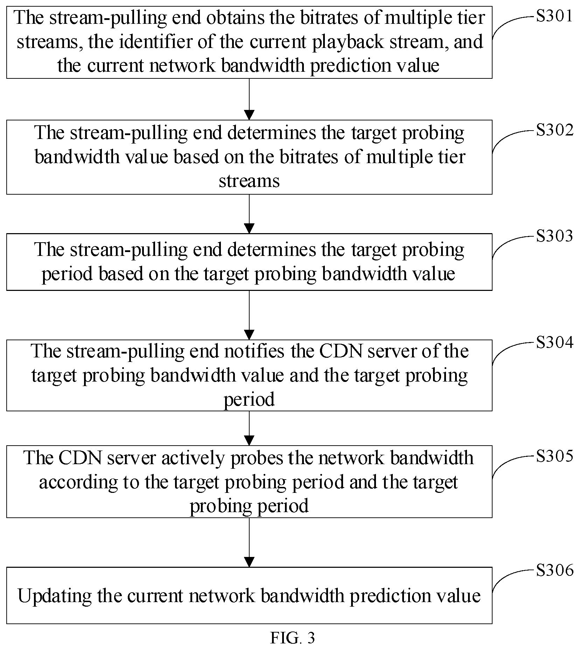

In some cases, the algorithm logic update iteration cycle of the CDN server is slow, or the CDN vendor does not support modification of the CDN algorithm logic. In such cases, the steps of the bandwidth probing method provided by the present application for determining the target probing bandwidth value and the target probing period may be implemented at the stream-pulling end, and the CDN server then actively probes the network bandwidth according to the target probing bandwidth value and the target probing period. As shown in FIG. 3, the specific process is as follows:
S301, the stream-pulling end obtains the bitrates of multiple tier streams, the identifier of the current playback stream, and the current network bandwidth prediction value;
S302, the stream-pulling end determines the target probing bandwidth value based on the bitrates of multiple tier streams;
S303, the stream-pulling end determines the target probing period based on the target probing bandwidth value;
S304, the stream-pulling end notifies the CDN server of the target probing bandwidth value and the target probing period;
S305, the CDN server actively probes the network bandwidth according to the target probing bandwidth value and the target probing period.
S306, updating the current network bandwidth prediction value.

The target probing bandwidth value and the target probing period are determined by the stream-pulling end, and the CDN server then actively probes the network bandwidth according to the target probing bandwidth value and the target probing period to determine the current network bandwidth prediction value. For the specific details of how the stream-pulling end determines the target probing bandwidth value and the target probing period, please refer to steps S201-S204.

The foregoing is an introduction to the application scenario embodiments of the bandwidth probing method provided by the present application. The following provides a detailed description through specific embodiments.

### First Embodiment

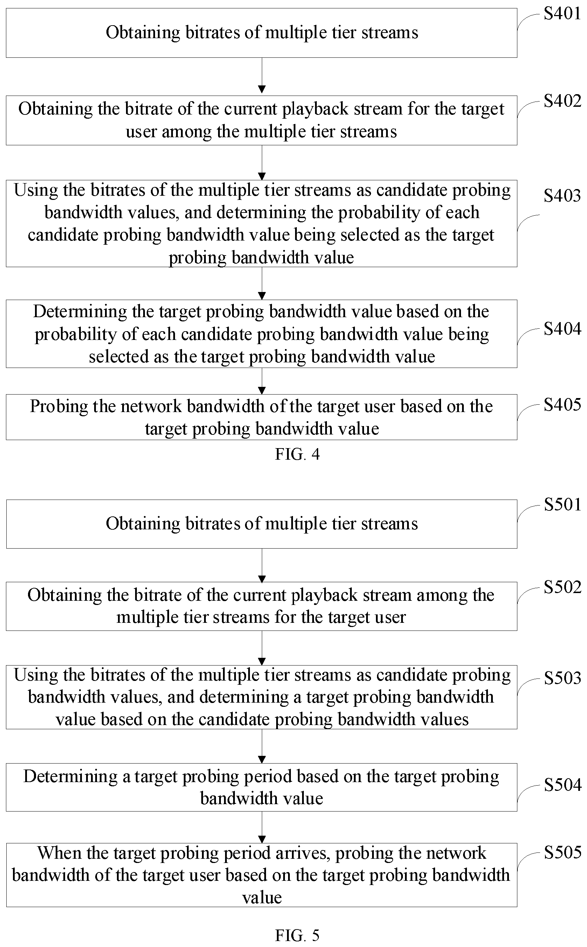

A first embodiment of the present application provides a bandwidth probing method, which is applied to a server, such as a CDN server, where the server is configured to send the live stream obtained from the stream-pushing end to the stream-pulling end corresponding to the target user. As shown in FIG. 4, the method includes the following steps:
S401, obtaining bitrates of multiple tier streams.

First, the server obtains multiple tier streams, that is, for the same live streaming content, the stream-pushing end sends live streams of multiple different bitrate tiers to the server, including the original stream and multiple transcoded streams, to accommodate different network conditions and user devices.

The bitrate of a live stream refers to the speed or bit rate at which live streaming data is transmitted during the live streaming process, representing the amount of information transmitted per unit of time (typically measured in seconds). A higher bitrate means more data is transmitted, which can theoretically provide higher video quality, but also increases the demand for network bandwidth.

The server receives the multiple tier streams sent by the stream-pushing end, and measures in real time the average bitrate of each tier stream among the multiple tier streams, that is, the bitrate of each tier stream, thereby obtaining the bitrates of the multiple tier streams.

Specifically, the server may measure in real time the data volume (in bits) of each tier stream within a unit time window (every second, every 500 ms, or every 250 ms; the present application does not limit the specific value of the unit time window), and then calculate the average bitrate (in bps = bits per second) of each tier stream, thereby obtaining the bitrates of the multiple tier streams.

S402, obtaining the bitrate of the current playback stream for the target user among the multiple tier streams.

The server sends one of the received multiple tier streams to the stream-pulling end corresponding to the target user for the user to watch, and the live stream currently sent to the stream-pulling end corresponding to the target user is the current playback stream for the target user. The bitrate of the current playback stream is the bitrate of the live stream currently being played by the stream-pulling end corresponding to the target user.

There are multiple ways to obtain the bitrate of the current playback stream, for example, by carrying bitrate information in feedback data according to live streaming protocols, or by indirectly calculating the transmitted bitrate information by recording and analyzing log files of the CDN server, or by using third-party tools and services to help monitor network traffic and bitrate, or by calling an interface to directly query the bitrate information of a live stream.

In the present embodiment, the bitrate of the current playback stream may be obtained through the following steps: first, obtaining the identifier of the current playback stream, such as the ID of the current playback stream, where the identifier of the current playback stream is used to distinguish the live streaming content corresponding to the current playback stream and the bitrate tier of the current live stream. Then, from the bitrates of the multiple tier streams, obtaining the bitrate corresponding to the identifier of the current playback stream, which is the bitrate of the current playback stream.

S403, using the bitrates of the multiple tier streams as candidate probing bandwidth values, and determining the probability of each candidate probing bandwidth value being selected as the target probing bandwidth value.

In the present embodiment, before obtaining the target probing bandwidth value based on the bitrates of the multiple tier streams, it is also necessary to obtain the current network bandwidth prediction value, and to determine the current network utilization status based on the current network bandwidth prediction value and the bitrate of the current playback stream.

In the present embodiment, the focus is primarily on the case where the current network utilization status indicates insufficient network bandwidth utilization, and the target probing bandwidth value is determined based on the bitrates of the multiple tier streams in order to probe for a higher network bandwidth value. Of course, the target probing bandwidth value may also be determined based on the bitrates of the multiple tier streams for other network utilization statuses, achieving the purpose of on-demand probing.

If the ratio of the bitrate of the current playback stream to the current network bandwidth prediction value is less than the preset threshold, that is, the bitrate of the current playback stream < *ω* ∗ the current network bandwidth prediction value, then the current network utilization status is determined to be the ALR state, that is, insufficient network bandwidth utilization. Here, *ω* is a hyperparameter related to the ALR state, set to 0.8 by default. At this point, the bitrates of the multiple tier streams are used as candidate probing bandwidth values, and the probability of each candidate probing bandwidth value being selected as the target probing bandwidth value is obtained.

Since in the ALR state, the bitrate of the current playback stream is lower than the current network bandwidth prediction value, it is necessary to probe for a higher network bandwidth value; therefore, the target probing bandwidth value is determined from among the candidate probing bandwidth values that are greater than the bitrate of the current playback stream.

The probability of a candidate probing bandwidth value greater than the bitrate of the current playback stream being selected as the target probing bandwidth value is negatively correlated with the magnitude of the candidate probing bandwidth value. Specifically, the probability of a candidate probing bandwidth value greater than the bitrate of the current playback stream being selected as the target probing bandwidth value may be determined through the following steps: obtaining the sum of the candidate probing bandwidth values greater than the bitrate of the current playback stream, as the sum of candidate probing bandwidth values; arranging the candidate probing bandwidth values greater than the bitrate of the current playback stream in ascending order to obtain an ascending-order queue, and arranging the candidate probing bandwidth values greater than the bitrate of the current playback stream in descending order to obtain a descending-order queue; for any candidate probing bandwidth value among the candidate probing bandwidth values greater than the bitrate of the current playback stream, obtaining the candidate probing bandwidth value in the descending-order queue that occupies the same position as said any candidate probing bandwidth value in the ascending-order queue, as the candidate probing bandwidth value corresponding to said any candidate probing bandwidth value; obtaining the ratio of the candidate probing bandwidth value corresponding to said any candidate probing bandwidth value to the sum of candidate probing bandwidth values, as the probability of said any candidate probing bandwidth value being selected as the target probing bandwidth value.

The specific implementation steps are as follows:
If the bitrates of the multiple tier streams used as candidate probing bandwidth values are *r*₁*, r*₂, ..., *rₙ,* respectively, where *r*₁ < *r*₂ < ··· < *rₙ,* n represents the number of bitrate tiers, *rᵢ* represents the bitrate of the current playback stream, *i* represents the bitrate tier of the current playback stream, 1 ≤ *i* ≤ *n*;

then the probability *pⱼ* of the candidate probing bandwidth value *rⱼ* greater than the bitrate of the current playback stream being selected as the target probing bandwidth value is calculated as follows:
${p}_{j} = \frac{{r}_{n + i + 1 - j}}{{\sum }_{k = i + 1}^{n} {r}_{k}}$ (3)
where *i +* 1 ≤ *j* ≤ *n*, *k = i +* 1, ..., *n*.

The probability determined according to the above formula (3) indicates that the probability of a candidate probing bandwidth value greater than the bitrate of the current playback stream being selected as the target probing bandwidth value is negatively correlated with the magnitude of the candidate probing bandwidth value; that is, the larger the candidate probing bandwidth value, the smaller the probability of it being selected, but in practical applications, every candidate probing bandwidth value greater than the bitrate of the current playback stream has a certain probability of being selected as the target probing bandwidth value.

It is determined that the probability of a candidate probing bandwidth value less than or equal to the bitrate of the current playback stream being selected as the target probing bandwidth value is 0; of course, the probability of a candidate probing bandwidth value less than or equal to the bitrate of the current playback stream being selected as the target probing bandwidth value may also be set to a smaller value, so that a candidate probing bandwidth value less than or equal to the bitrate of the current playback stream will not be selected as the target probing bandwidth value.

S404, determining the target probing bandwidth value based on the probability of each candidate probing bandwidth value being selected as the target probing bandwidth value.

After determining the probability of each candidate probing bandwidth value being selected as the target probing bandwidth value, unequal probability sampling may be used to sample a candidate probing bandwidth value as the target probing bandwidth value.

Unequal probability sampling is a random sampling method in which each unit in the population has a different probability of being selected into the sample, meaning that before the sample is drawn, each unit in the population is assigned a specific probability of being selected, and these probabilities can be allocated according to various principles. The purpose of unequal probability sampling is to improve sampling efficiency or accuracy, especially when the subjects under study exhibit significant differences. Unequal probability sampling is divided into two cases: with replacement and without replacement. Unequal probability sampling with replacement: this type of sampling allows the same unit to be selected multiple times. The most common case is to determine the selection probability based on the size of each unit in the population. Unequal probability sampling without replacement: in this process, once a unit is selected, it cannot be selected again, so that after each sampling, the number and probabilities of the remaining units change.

In the present embodiment, after any candidate probing bandwidth value is selected as the target probing bandwidth value, the network bandwidth may be probed based on the target probing bandwidth value, and the current network bandwidth prediction value may be obtained.

In the present embodiment, probing the network bandwidth based on the target probing bandwidth value mainly employs the WebRTC active probing method, that is, data is sent within a short period of time at the specified target probing bandwidth value, and whether the network bandwidth reaches the target probing bandwidth value is determined by comparing the data reception rate against the target probing bandwidth value. If the data reception rate equals the target probing bandwidth value, then the network bandwidth is greater than or equal to the target probing bandwidth value; if the data reception rate is less than the target probing bandwidth value, it indicates that packet loss has occurred in the network at that time, and the network bandwidth is less than the target probing bandwidth value.

Regarding the timing of active probing, active probing may be performed according to a fixed probing period. In order to avoid setting the probing period too small, which would cause excessively high traffic costs, or setting the probing period too large, which would result in an untimely response to network conditions, the present application provides a method that allows the probing period to be set flexibly.

Specifically, the target probing period is determined based on the target probing bandwidth value, where the target probing period corresponding to a candidate probing bandwidth value greater than the bitrate of the current playback stream being selected as the target probing bandwidth value is positively correlated with the magnitude of the candidate probing bandwidth value; that is, the larger the target probing bandwidth value, the larger the target probing period, thereby avoiding excessively high traffic costs caused by sending padding data during the bandwidth probing process.

Further, the target probing period may be determined according to the following steps: determining the probing period corresponding to the maximum candidate probing bandwidth value among the candidate probing bandwidth values greater than the bitrate of the current playback stream; obtaining the ratio of the target probing bandwidth value to the maximum candidate probing bandwidth value as the probing bandwidth value ratio; and obtaining the product of the probing bandwidth value ratio and the probing period corresponding to the maximum candidate probing bandwidth value as the target probing period.

At this point, the two important pieces of information for performing active probing, namely the target probing bandwidth value and the target probing period, have both been determined, and the network bandwidth can now be probed.

S405, probing the network bandwidth of the target user based on the target probing bandwidth value.

When the target probing period arrives, active probing is performed on the network bandwidth of the target user based on the target probing bandwidth value, and the data reception rate during the probing of the network bandwidth of the target user is obtained.

If the data reception rate equals the target probing bandwidth value, the current network bandwidth prediction value is updated to the target probing bandwidth value. If the data reception rate is less than the target probing bandwidth value, the current network bandwidth prediction value is updated to the data reception rate.

Further, after the current network bandwidth prediction value is updated, the server sends the current network bandwidth prediction value updated after probing the network bandwidth of the target user to the stream-pulling end, so that the stream-pulling end uses an adaptive bitrate algorithm to decide the bitrate tier of the live stream. The server obtains the bitrate tier update request generated by the stream-pulling end based on the updated current network bandwidth prediction value, and sends the live stream with the updated bitrate tier to the stream-pulling end based on the bitrate tier update request, for playback by the stream-pulling end.

At this point, the process of using the bitrates of multiple tier streams as candidate probing bandwidth values when the current network bandwidth utilization is insufficient, determining the target probing bandwidth value from among them, and determining the target probing period based on the target probing bandwidth value, so as to probe the network bandwidth and determine the current network bandwidth prediction value, has been described in detail. Insufficient current network bandwidth utilization indicates that the bitrate tier of the current playback stream can be improved; however, blindly setting a large target probing bandwidth value may cause network congestion or abrupt changes in video quality experienced by the user during the probing process. Therefore, determining the target probing bandwidth value from multiple tier streams achieves the purpose of on-demand probing and avoids unnecessary traffic cost waste, and the current network bandwidth prediction value determined in this way is relatively accurate, that is, the current network bandwidth prediction value satisfies the required network bandwidth value. The probability that a candidate probing bandwidth value greater than the bitrate of the current playback stream is selected as the target probing bandwidth value is negatively correlated with the magnitude of the candidate probing bandwidth value, so that candidate probing bandwidth values closer to the bitrate of the current playback stream have more opportunities to be selected as the target probing bandwidth value; in this way, during the active probing process, network congestion or abrupt changes in video quality experienced by the user can be avoided. By determining different target probing periods based on different target probing bandwidth values, the traffic cost overhead caused by the probing bandwidth can be flexibly adjusted, thereby avoiding excessively frequent probing that leads to excessive traffic costs when the target probing bandwidth value is large, while also ensuring timely response to network conditions.

In addition, if the ratio of the bitrate of the current playback stream to the current network bandwidth prediction value is greater than or equal to the preset threshold, that is, the bitrate of the current playback stream ≥ *ω* ∗ the current network bandwidth prediction value, it is determined that the current network utilization status is not in the ALR state. In this case, a bandwidth estimation method such as GCC or BBR may be used to update the current network bandwidth prediction value.

Similarly, the server sends the current network bandwidth prediction value updated by the bandwidth estimation method to the stream-pulling end, so that the stream-pulling end uses an adaptive bitrate algorithm to decide the bitrate tier of the live stream. The server obtains the bitrate tier update request generated by the stream-pulling end based on the updated current network bandwidth prediction value, and sends the live stream with the updated bitrate tier to the stream-pulling end based on the bitrate tier update request, for playback by the stream-pulling end.

### Second Embodiment

A second embodiment of the present application provides a bandwidth probing method, applied to a server, such as a CDN server, where the server is configured to send a live stream obtained from a stream-pushing end to a stream-pulling end corresponding to the target user. As shown in FIG.5, the method comprises the following steps:
S501, obtaining bitrates of multiple tier streams;
S502, obtaining the bitrate of the current playback stream among the multiple tier streams for the target user;
S503, using the bitrates of the multiple tier streams as candidate probing bandwidth values, and determining a target probing bandwidth value based on the candidate probing bandwidth values;
S504, determining a target probing period based on the target probing bandwidth value;
S505, when the target probing period arrives, probing the network bandwidth of the target user based on the target probing bandwidth value.

Optionally, the target probing period corresponding to when a candidate probing bandwidth value that is greater than the bitrate of the current playback stream is selected as the target probing bandwidth value is determined through the following steps: determining the probing period corresponding to the maximum candidate probing bandwidth value among the candidate probing bandwidth values that are greater than the bitrate of the current playback stream; obtaining a ratio of the target probing bandwidth value to the maximum candidate probing bandwidth value, as the probing bandwidth value ratio; and obtaining a product of the probing bandwidth value ratio and the probing period corresponding to the maximum candidate probing bandwidth value, as the target probing period.

Optionally, the method further comprises: obtaining a current network bandwidth prediction value;
The using the bitrates of the multiple tier streams as candidate probing bandwidth values, and obtaining a target probing bandwidth value based on the candidate probing bandwidth values, comprises: if a ratio of the bitrate of the current playback stream to the current network bandwidth prediction value is less than a preset threshold, using the bitrates of the multiple tier streams as candidate probing bandwidth values, and obtaining a target probing bandwidth value based on the candidate probing bandwidth values.

The bandwidth probing method provided in the present embodiment is mainly directed at providing a more flexible means for setting the target probing period; for the specific implementation and technical effects, please refer to the first embodiment.

### Third Embodiment

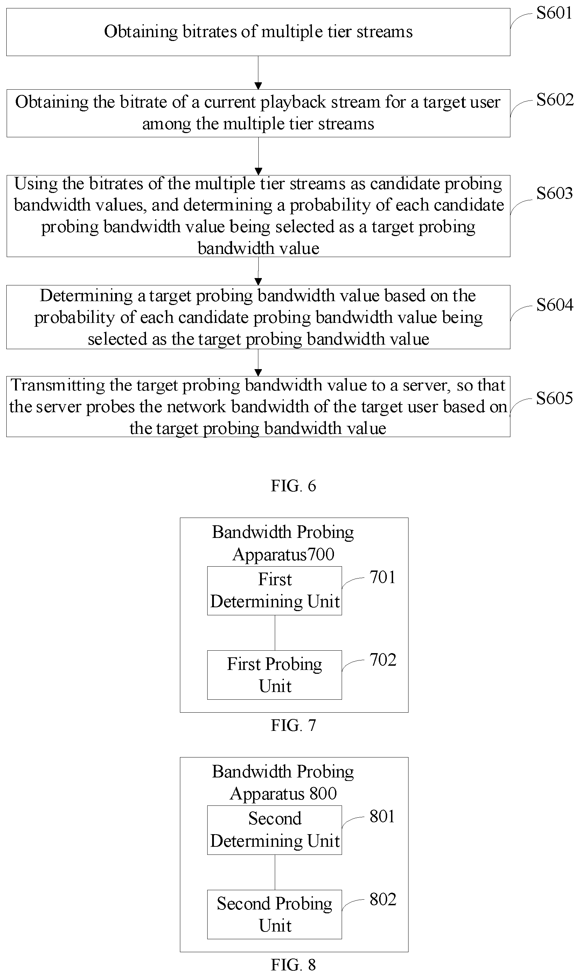

A third embodiment of the present application provides a bandwidth probing method, which is applied to a stream-pulling end corresponding to a target user, where the stream-pulling end is configured to receive a live stream obtained by a server from a stream-pushing end. As shown in FIG. 6, the method comprises the following steps:
S601, obtaining bitrates of multiple tier streams;
S602, obtaining the bitrate of a current playback stream for a target user among the multiple tier streams;
S603, using the bitrates of the multiple tier streams as candidate probing bandwidth values, and determining a probability of each candidate probing bandwidth value being selected as a target probing bandwidth value;
S604, determining a target probing bandwidth value based on the probability of each candidate probing bandwidth value being selected as the target probing bandwidth value;
S605, transmitting the target probing bandwidth value to a server, so that the server probes the network bandwidth of the target user based on the target probing bandwidth value.

Optionally, the method further comprises: determining a target probing period based on the target probing bandwidth value; transmitting the target probing period to the server; and when the target probing period arrives, the server probes the network bandwidth of the target user based on the target probing bandwidth value.

The bandwidth probing method provided in the present embodiment is directed at situations where the algorithm logic update and iteration cycle of the CDN server is slow or the CDN vendor does not support modification of CDN algorithm logic; in such situations, the stream-pulling end determines the important information needed for performing active probing, namely the target probing bandwidth value and the target probing period. The stream-pulling end transmits the target probing bandwidth value and the target probing period to the CDN server, and the CDN server probes the network bandwidth based on the target probing bandwidth value and the target probing period determined by the stream-pulling end, thereby determining the current network bandwidth prediction value. Of course, the CDN server needs to transmit the current network bandwidth prediction value to the stream-pulling end, so that the stream-pulling end can use the adaptive bitrate algorithm to determine the bitrate tier of the live stream. For related content, please refer to the first embodiment.

### Fourth Embodiment

A fourth embodiment of the present application provides a bandwidth probing apparatus, as shown in FIG. 7. The apparatus corresponds to the bandwidth probing method provided in the first embodiment; since the apparatus embodiment is similar to the method embodiment, the description here is relatively brief, and for related details please refer to the content of the first embodiment.

The bandwidth probing apparatus 700 provided in the present embodiment comprises:
a first determining unit 701, configured to obtain bitrates of multiple tier streams; obtain the bitrate of a current playback stream for a target user among the multiple tier streams; use the bitrates of the multiple tier streams as candidate probing bandwidth values, and determine a probability of each candidate probing bandwidth value being selected as a target probing bandwidth value; and determine a target probing bandwidth value based on the probability of each candidate probing bandwidth value being selected as the target probing bandwidth value;
a first probing unit 702, configured to probe the network bandwidth of the target user based on the target probing bandwidth value.

The above is an introduction to the bandwidth probing apparatus provided in the fourth embodiment of the present application.

### Fifth Embodiment

A fifth embodiment of the present application provides a bandwidth probing apparatus, as shown in FIG. 8. The apparatus corresponds to the bandwidth probing method provided in the second embodiment. Since the apparatus embodiment is similar to the method embodiment, the description herein is relatively brief; for details, please refer to the content of the second embodiment.

The bandwidth probing apparatus 800 provided in the present embodiment comprises:
A second determining unit 801, configured to obtain bitrates of multiple tier streams; obtain a bitrate of a current playback stream for a target user among the multiple tier streams; use the bitrates of the multiple tier streams as candidate probing bandwidth values, and determine a target probing bandwidth value based on the candidate probing bandwidth values; and determine a target probing period based on the target probing bandwidth value;
a second probing unit 802, configured to, when the target probing period arrives, probe a network bandwidth of the target user based on the target probing bandwidth value.

The foregoing is an introduction to the bandwidth probing apparatus provided in the fifth embodiment of the present application.

### Sixth Embodiment

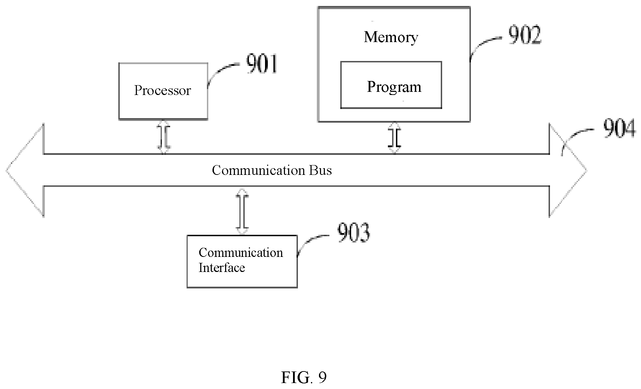

The sixth embodiment of the present application provides an electronic device, as shown in FIG. 9. The electronic device comprises: at least one processor 901, at least one memory 902, at least one communication interface 903, and at least one communication bus 904. Optionally, the processor 901 may be a processor CPU, or a specific integrated circuit ASIC (Application Specific Integrated Circuit), or one or more integrated circuits configured to implement the embodiments of the present application. The memory 902 may contain high-speed RAM memory, and may also include non-volatile memory, such as at least one disk memory. The communication interface 903 may be an interface of a communication module, such as a GSM module interface. The memory 902 stores programs and data, and the processor 901 calls the programs stored in the memory 902 to execute the above-described bandwidth probing method.

### Seventh Embodiment

A seventh embodiment of the present application provides a storage medium, where the storage medium stores a program and data, and the program is executed by a processor to implement the above-mentioned bandwidth probing method.

User information (including but not limited to user device information, user personal information, etc.) and data (including but not limited to data used for analysis, stored data, displayed data, etc.) involved in the present application are information and data that have been authorized by users or fully authorized by all parties, and the collection, use, and processing of such data must comply with the relevant laws, regulations, and standards of the relevant countries and regions, and corresponding operation interfaces must be provided for users to choose to authorize or refuse.

Although a number of modules or units for performing actions have been mentioned in the detailed description above, such a division is not mandatory. In practice, according to the specific implementations of the present application, the features and functions of two or more modules or units described above may be embodied in one module or unit. Conversely, the features and functions of one module or unit described above may be further divided into multiple modules or units for embodiment.

Furthermore, although the various steps of the methods in the present application are described in a specific order in the drawings, this does not require or imply that the steps must be performed in that specific order, or that all illustrated steps must be performed to achieve the desired results. Additionally or alternatively, certain steps may be omitted, multiple steps may be combined into one step for execution, and/or one step may be decomposed into multiple steps for execution.

It should be noted that the embodiments of the present application may be implemented by hardware, software, or a combination of software and hardware. The hardware portion may be implemented using dedicated logic; the software portion may be stored in a memory and executed by an appropriate instruction execution system, such as a microprocessor or specially designed hardware. Those of ordinary skill in the art will appreciate that the above-described devices and methods may be implemented using computer-executable instructions and/or code contained in processor control code, such as code provided on a carrier medium such as a disk, CD, or DVD-ROM, a programmable memory such as read-only memory (firmware), or a data carrier such as an optical or electronic signal carrier. The devices and modules of the present application may be implemented by hardware circuits such as very large-scale integrated circuits or gate arrays, semiconductors such as logic chips and transistors, or programmable hardware devices such as field-programmable gate arrays and programmable logic devices; they may also be implemented by software executed by various types of processors, or by a combination of the aforementioned hardware circuits and software, such as firmware.

The foregoing descriptions are merely specific implementations of the present application, but the scope of protection of the present application is not limited thereto. Any person skilled in the art who, within the technical scope disclosed by the present application, makes any modifications, equivalent substitutions, and improvements within the spirit and principles of the present application shall be encompassed within the scope of protection of the present application.

## Claims

1. A bandwidth probing method, comprising:
obtaining bitrates of multiple tier streams;
obtaining a bitrate of a current playback stream, among the multiple tier streams, for a target user;
using the bitrates of the multiple tier streams as candidate probing bandwidth values, and determining a probability of each candidate probing bandwidth value being selected as a target probing bandwidth value;
determining a target probing bandwidth value based on the probability of each candidate probing bandwidth value being selected as a target probing bandwidth value;
probing a network bandwidth of the target user based on the target probing bandwidth value.

2. The bandwidth probing method of claim 1, wherein the obtaining a bitrate of a current playback stream, among the multiple tier streams, for a target user comprises:
obtaining an identifier of the current playback stream for the target user;
obtaining, from the bitrates of the multiple tier streams, a bitrate corresponding to the identifier of the current playback stream, as the bitrate of the current playback stream.

3. The bandwidth probing method of claim 1, further comprising: obtaining a current network bandwidth prediction value;
wherein the using the bitrates of the multiple tier streams as candidate probing bandwidth values, and determining a probability of each candidate probing bandwidth value being selected as a target probing bandwidth value, comprises:
if a ratio of the bitrate of the current playback stream to the current network bandwidth prediction value is less than a preset threshold, using the bitrates of the multiple tier streams as candidate probing bandwidth values, and determining a probability of each candidate probing bandwidth value being selected as a target probing bandwidth value.

4. The bandwidth probing method of claim 1, wherein a probability of a candidate probing bandwidth value that is greater than the bitrate of the current playback stream being selected as a target probing bandwidth value is determined through the following steps:
obtaining a sum of candidate probing bandwidth values that are greater than the bitrate of the current playback stream, as the sum of candidate probing bandwidth values;
arranging the candidate probing bandwidth values that are greater than the bitrate of the current playback stream in ascending order to obtain an ascending-order queue, and arranging the candidate probing bandwidth values that are greater than the bitrate of the current playback stream in descending order to obtain a descending-order queue;
for any candidate probing bandwidth value among the candidate probing bandwidth values that are greater than the bitrate of the current playback stream, obtaining a candidate probing bandwidth value in the descending-order queue that occupies the same position as the any candidate probing bandwidth value in the ascending-order queue, as the candidate probing bandwidth value corresponding to the any candidate probing bandwidth value;
obtaining a ratio of the candidate probing bandwidth value corresponding to the any candidate probing bandwidth value to the sum of candidate probing bandwidth values, as the probability of the any candidate probing bandwidth value being selected as a target probing bandwidth value.

5. The bandwidth probing method of claim 1, wherein a probability of a candidate probing bandwidth value that is less than or equal to the bitrate of the current playback stream being selected as a target probing bandwidth value is determined to be 0.

6. The bandwidth probing method of claim 1, wherein the determining a target probing bandwidth value based on the probability of each candidate probing bandwidth value being selected as a target probing bandwidth value comprises:
based on the probability of each candidate probing bandwidth value being selected as the target probing bandwidth value, sampling a candidate probing bandwidth value using an unequal probability sampling method, as the target probing bandwidth value.

7. The bandwidth probing method of claim 1, further comprising:
determining a target probing period based on the target probing bandwidth value;
the probing the network bandwidth of the target user based on the target probing bandwidth value, comprising:
probing the network bandwidth of the target user based on the target probing bandwidth value when the target probing period arrives.

8. The bandwidth probing method of claim 7, wherein the target probing period corresponding to when a candidate probing bandwidth value greater than the bitrate of the current playback stream is selected as the target probing bandwidth value is determined through the following steps:
determining a probing period corresponding to a maximum candidate probing bandwidth value among the candidate probing bandwidth values greater than the bitrate of the current playback stream;
obtaining a ratio of the target probing bandwidth value to the maximum candidate probing bandwidth value as a probing bandwidth value ratio;
obtaining a product of the probing bandwidth value ratio and the probing period corresponding to the maximum candidate probing bandwidth value as the target probing period.

9. The bandwidth probing method of claim 1, further comprising:
obtaining a data reception rate during probing of the network bandwidth of the target user;
if the data reception rate is equal to the target probing bandwidth value, updating the current network bandwidth prediction value to the target probing bandwidth value.

10. The bandwidth probing method of claim 3, further comprising:
if the ratio of the bitrate of the current playback stream to the current network bandwidth prediction value is greater than or equal to the preset threshold, updating the current network bandwidth prediction value using a bandwidth estimation method.

11. The bandwidth probing method of claim 1, wherein the obtaining the bitrates of multiple tier streams comprises:
receiving multiple tier streams, and measuring in real time an average bitrate of each tier stream among the multiple tier streams to obtain the bitrates of the multiple tier streams.

12. The bandwidth probing method of claim 1, wherein the method is applied to a server, and the server is configured to send a live stream obtained from a stream-pushing end to a stream-pulling end corresponding to the target user;
the method further comprising:
the server transmitting a current network bandwidth prediction value updated after probing the network bandwidth of the target user to the stream-pulling end;
the server obtaining a bitrate tier update request generated by the stream-pulling end based on the updated current network bandwidth prediction value;
the server transmitting, to the stream-pulling end, a live stream with an updated bitrate tier based on the bitrate tier update request.

13. The method of claim 1, wherein the method is applied to a stream-pulling end corresponding to the target user, and the stream-pulling end is configured to receive a live stream obtained by a server from a stream-pushing end;
the probing the network bandwidth of the target user based on the target probing bandwidth value, comprising:
the stream-pulling end transmitting the target probing bandwidth value to the server, so that the server probes the network bandwidth of the target user based on the target probing bandwidth value.

14. A bandwidth probing method, comprising:
obtaining bitrates of multiple tier streams;
obtaining a bitrate of a current playback stream for a target user among the multiple tier streams;
using the bitrates of the multiple tier streams as candidate probing bandwidth values, and determining a target probing bandwidth value based on the candidate probing bandwidth values;
determining a target probing period based on the target probing bandwidth value;
probing a network bandwidth of the target user based on the target probing bandwidth value when the target probing period arrives.

15. The bandwidth probing method of claim 14, wherein a target probing period corresponding to a candidate probing bandwidth value greater than the bitrate of the current playback stream when selected as the target probing bandwidth value is determined through the following steps:
determining a probing period corresponding to a maximum candidate probing bandwidth value among the candidate probing bandwidth values greater than the bitrate of the current playback stream;
obtaining a ratio of the target probing bandwidth value to the maximum candidate probing bandwidth value as a probing bandwidth value ratio;
obtaining a product of the probing bandwidth value ratio and the probing period corresponding to the maximum candidate probing bandwidth value as the target probing period.

16. The bandwidth probing method of claim 14, wherein the method further comprises: obtaining a current network bandwidth prediction value;
the using the bitrates of the multiple tier streams as candidate probing bandwidth values, and obtaining a target probing bandwidth value based on the candidate probing bandwidth values, comprises:
if a ratio of the bitrate of the current playback stream to the current network bandwidth prediction value is less than a preset threshold, using the bitrates of the multiple tier streams as candidate probing bandwidth values, and obtaining a target probing bandwidth value based on the candidate probing bandwidth values.

17. A bandwidth probing apparatus, comprising:
a first determining unit, configured to obtain bitrates of multiple tier streams; obtain a bitrate of a current playback stream for a target user among the multiple tier streams; use the bitrates of the multiple tier streams as candidate probing bandwidth values, and determine a probability of each candidate probing bandwidth value being selected as a target probing bandwidth value; and determine a target probing bandwidth value based on the probability of each candidate probing bandwidth value being selected as the target probing bandwidth value;
a first probing unit, configured to probe network bandwidth of the target user based on the target probing bandwidth value.

18. A bandwidth probing apparatus, comprising:
a second determining unit, configured to obtain bitrates of multiple tier streams; obtain a bitrate of a current playback stream for a target user among the multiple tier streams; use the bitrates of the multiple tier streams as candidate probing bandwidth values, and determine a target probing bandwidth value based on the candidate probing bandwidth values; and determine a target probing period based on the target probing bandwidth value;
a second probing unit, configured to probe network bandwidth of the target user based on the target probing bandwidth value when the target probing period arrives.

19. An electronic device, comprising a processor and a memory;
the memory is configured to store programs and data, and the processor invokes the programs stored in the memory to execute the bandwidth probing method according to any one of claims 1-16.

20. A storage medium, wherein the storage medium stores programs and data, and the programs are executed by a processor to implement the bandwidth probing method according to any one of claims 1-16.
